# EUROPEAN PATENT SPECIFICATION

(11) **EP 3 943 202 B1**
(45) Date of publication and mention of the grant of the patent: **06.09.2023**
(21) Application number: 21183104.5
(22) Date of filing: 01.07.2021
(51) Int. Cl.: B08B 3/02, F24H 1/06, F24H 9/20, F24H 1/10

(54) **A HOT WATER CLEANER WITH TEMPERATURE CONTROL**
HEISSWASSERREINIGER MIT TEMPERATURKONTROLLE
NETTOYEUR À EAU CHAUDE AVEC CONTRÔLE DE TEMPÉRATURE

(30) Priority: 09.07.2020 IT 202000016768
(43) Date of publication of application: 26.01.2022
(73) Proprietor: IP Cleaning S.r.l., 30026 Portogruaro Venezia (IT)
(72) Inventor: VERNAZZA, Giulio, 43012 Fontanellato (PR) (IT)
(74) Representative: Locas, Davide

(56) References cited:
- DE-A1- 10 122 433
- DE-C1- 4 414 971
- US-A1- 2018 272 392

## Description

### Field of the invention

The present invention relates to the field of the water cleaners, and in particular it relates to a hot water cleaner, i.e. of the type that is able to deliver a jet of a cleaning liquid at high pressure and high temperature in order to remove materials of different kind, in particular dirty and encrustations, from the treated surfaces.

The invention also relates to a method for adjusting the temperature of the cleaning liquid supplied by a water cleaner.

### Description of the prior art

As known, the hand-actuated water cleaners are equipped with a jet lance, or a gun, through which a high pressure cleaning liquid jet, generally a water jet, or a jet of a mix of water and detergent, and, in case, of a descaling agent for preserving the parts of the machine, is supplied. The hot water cleaners, since they use water at high pressure and temperature, allow to provide, under the same pressure, a cleaning action more effective with respect to the water cleaners supplying water at environment temperature. The high pressure jet is obtained by a pump unit that is hydraulically connected to the jet lance through a hydraulic circuit and that is able to provide, at the exit, a water flow at a pressure that is normally comprised between 25 and 350 bar, or even higher. More precisely, the pump unit, generally a piston pump operated by an electric motor, is connected at the delivery pipe to a hydraulic circuit which ends with the delivering jet lance and, at the suction pipe, to a source of water, normally the hydraulic network. However, also water cleaners equipped with a self-priming pump are known. According to the laws in force, in case of water cleaners with a maximum outlet temperature of 110°C, the maximum pressure that can be used is 350 bar, like those using cold water. If, instead, the maximum outlet temperature is higher than 110°C, the maximum pressure that can be used cannot exceed 32 bar.

The hydraulic circuit of a water cleaner of this kind provides, generally, a boiler for heating the water at high pressure coming from the pump unit up to a determined temperature. The temperature at which the water is heated by the boiler depends on the type of appliance to which the water cleaner is destined and can be in general adjust in such a way to have a versatile machine, i.e. that can be used for different purposes, that go from cleaning the bodies of the cars, to the cleaning of surfaces of several types, for example the floor of buildings, the hulls of boats, but also to the sanitizing operations of the environments.

Normally, the hydraulic circuit, furthermore, provides a first and a second pressure switches connected to a control unit. More in detail, the control unit combines the signals coming from the two pressure switches in order to monitor the working state of the machine. In particular, the combination of the aforementioned signals allows to verify the operation of the machine without feeding, if the machine is in stand-by, if during the operation an interruption of work occurs, if the boiler becomes blocked, if this has a pressure (equivalent flow rate) that is less than minimum admissible value and any micro-leak at the hydraulic circuit.

Therefore, in these machines, the control unit adjusts also the temperature at which the water exits the boiler. This is possible, because, these water cleaners are provided with a temperature sensor which detects the temperature of the water and sends a corresponding temperature signal to the control unit which adjusts the boiler accordingly carrying out an ON/OFF operation, i.e. turning on, or turning off the boiler, by opening, or closing, one, or more valves adjusting the flow rate of fuel towards the boiler. Therefore, in the hot water cleaners of prior art, the temperature at which the water is delivered is controlled by continuously turning on and turning off the boiler. This unavoidably continuous changes in the outlet temperature of the cleaning liquid used that, therefore, varies within a very large range of values. Therefore, the adjustment of the temperature of the cleaning liquid in the hot water cleaners of prior art is not very accurate and stable, showing a more or less evident swinging behaviour.

In particular, once that a determined cleaning program, has been set, at least in a first moment from the turning on of the machine, the outlet temperature of the water, or other cleaning liquid used, is not the one that has been defined for the chosen cleaning program, with the consequence that a temperature can be used that is less than the temperatures needed to have an effective cleaning action, or higher, with the risk, in this case, to damage the treated surface.

Examples of water cleaners of prior art using a liquid at high pressure and temperature with the aforementioned drawbacks are described in EP0591660, WO00/45967, US5607349, DE4414971, which discloses a water cleaner in accordance with the preamble of claim 1 and US2018/272392. DE10122433 A1 discloses an apparatus for cleaning objects with water at high pressure, water is heated with a boiler comprising temperature sensors and moved through a high pressure line to a spray nozzle.

### Summary of the invention

It is, therefore, an object of the present invention to provide a hot water cleaner that is able to overcome the aforementioned drawbacks of the hot water cleaners of prior art.

It is in particular an object of the present invention to provide a water cleaner which allows to adjust the temperature of the cleaning liquid supplied in the ideal working conditions, i.e. with the boiler that is always turned on, avoiding to have to continuously turn on, or turn off the boiler like, instead, happens in the water cleaners of prior art.

It is, furthermore, an object of the present invention to provide a hot water cleaner that is able to highly accurately and stably adjust the temperature of the cleaning liquid delivered through a delivery device such as a jet lance, or a gun, in such a way to guarantee to a user to actually use the prearranged temperature for the specific set cleaning program that has to be carried out by the machine.

It is also an object of the present invention to provide a method for adjusting highly accurately and stabile the temperature of the cleaning liquid supplied by a water cleaner having the same advantages.

These and other objects are achieved by a water cleaner comprising a hydraulic circuit equipped with:
- a pump unit arranged to feed a predetermined flow rate of a cleaning liquid into a main branch of said hydraulic circuit;
- a boiler arranged to provide a predetermined thermal power to at least a part of said predetermined flow rate of said cleaning liquid in order to cause the same to be heated from an inlet temperature Ti up to a predetermined outlet temperature Tu*;
- a delivery device hydraulically connected to said boiler and arranged to deliver said flow rate of said cleaning liquid at said predetermined outlet temperature Tu*;
- an adjustment device configured to adjust the aforementioned flow rate of cleaning liquid that is fed to said boiler;
- a second temperature sensor arranged to detect the temperature of said flow rate of cleaning liquid downstream of said boiler and to generate a corresponding outlet temperature signal Tu;
whose main characteristic is that are, furthermore, provided:
- a first temperature sensor arranged to detect the temperature of said flow rate of cleaning liquid upstream of said boiler and to generate a corresponding inlet temperature signal Ti;
- a control unit operatively connected to said first temperature sensor, to said second temperature sensor and to said adjustment device, said control unit being configured to set a determined starting flow rate of said cleaning liquid to be fed into said boiler which depends on the aforementioned inlet temperature signal Ti received by the aforementioned first sensor, to compare said outlet temperature signal Tu received by the aforementioned second temperature sensor with said predetermined outlet temperature value Tu*, and to operate said adjustment device in such a way to increase, or decrease, said flow rate of said cleaning liquid fed into said boiler with respect to said starting flow rate, if said outlet temperature signal Tu is different from said predetermined outlet temperature value Tu*, in accordance with claim 1.

Other features of the invention and the related embodiments are described in the dependent claims.

In particular, the aforementioned hydraulic circuit can comprise at least a return branch. More in particular, the return branch is arranged to intersect the aforementioned main branch of the hydraulic circuit between a first point P1 positioned downstream of the pump unit and a second point P2 positioned upstream of the pump unit.

Preferably, the aforementioned flow rate adjustment device is provided on the return branch.

In particular, the control unit can be configured to operate the aforementioned adjustment device in such a way that this is arranged to deviate, at the first point, sending the same at the second point, to subtract the aforementioned predetermined flow rate that is fed by the pump unit, in such a way to adjust the cleaning liquid flow rate that is fed into the boiler. In this way, it is possible to adjust the flow rate of the cleaning liquid that is fed into the boiler increasing, or decreasing the adjustment flow rate, by the aforementioned adjustment device, avoiding to continuously have to turn on and turn off the boiler. In other words, the flow rate that is fed into the boiler is adjusted with respect to a determined starting adjustment flow rate, i.e. with respect to a reference flow rate (φ*) that is computed on the basis of a proprietary algorithm, that is subtracted from a predetermined flow rate delivered by the pump unit, in such a way to feed into the boiler a corresponding flow rate of cleaning liquid in order to obtain a flow rate of cleaning liquid exiting the boiler at an outlet temperature (Tu) corresponding to a predetermined outlet temperature value Tu*. In this way it is possible to operate in the ideal working conditions, i.e. with the boiler that is always turned on.

The particular technical solution according to the present invention allows, on the one hand, to eliminate the thermal jumps that occur in the prior art solutions, in particular owing to the sudden changes of temperature of the cleaning liquid supplied by the hydraulic network. Therefore, it is possible to carry out a very accurate and stable intervention aimed at the specific type of the chosen cleaning program. Furthermore, to be able to adjust highly accurately the outlet temperature Tu of the cleaning liquid, unlike the water cleaners of prior art, allows to use the water cleaner 1, according to the invention, also for works for disinfecting and/or sanitising both public environments, such as hospitals, shops, public offices, hotels, airports, stations, gyms etc. and private environments such as houses.

In particular, a selector device can be, furthermore, provided configured to select a predetermined cleaning program among a plurality of predetermined cleaning programs. More in particular, each cleaning program can be associated to a predetermined outlet temperature Tu*.

Advantageously, each cleaning program that is loaded in the memory of the machine is associated to a predetermined value of the outlet temperature Tu*.

In particular, the control unit is arranged to temporarily set as predetermined outlet temperature value Tu* the outlet temperature associated to the cleaning program selected by the user by the selector device. In practice, the control unit is arranged to select the aforementioned outlet temperature Tu* among a plurality of predetermined outlet temperature values T1u*, Tu2*, Tui*...Tun* each of which associated to a cleaning program which can be selected by the user.

According to another aspect of the invention, a method for adjusting the temperature of the cleaning liquid supplied by a water cleaner comprises the steps of:
- pumping into a hydraulic circuit a predetermined flow rate of a cleaning liquid by a pump unit;
- heating by a boiler said cleaning liquid up to reach a predetermined temperature;
- detecting the temperature of the flow rate of the liquid entering into the boiler by a first temperature sensor positioned upstream of the boiler generating a corresponding inlet temperature signal Ti;
- detecting the temperature of the flow rate of the liquid exiting said boiler by a second temperature sensor positioned downstream of said boiler generating a corresponding outlet temperature signal Tu;
- sending said inlet temperature signal Ti and said outlet temperature signal Tu to a control unit;
- setting by said control unit a starting flow rate of cleaning liquid to be fed into the boiler, said starting flow rate being computed according to said inlet temperature signal Ti;
- comparing by said control unit said outlet temperature signal Tu with a predetermined outlet temperature value Tu*;
- operating by said control unit an adjustment device in order to increase, or decrease, the cleaning liquid flow rate that is fed into the boiler with respect to the aforementioned determined starting flow rate, said operating step of said adjustment device being carried out by said control unit according to the result of said comparing step of said outlet temperature signal Tu with respect to said predetermined outlet temperature value Tu*, in accordance with claim 15.

### Brief description of the drawings

The invention will now be shown with the following description of its exemplary embodiments, exemplifying but not limitative, with reference to the attached drawings in which:
- Fig. 1 shows a scheme of a first embodiment of a water cleaner, according to the invention;

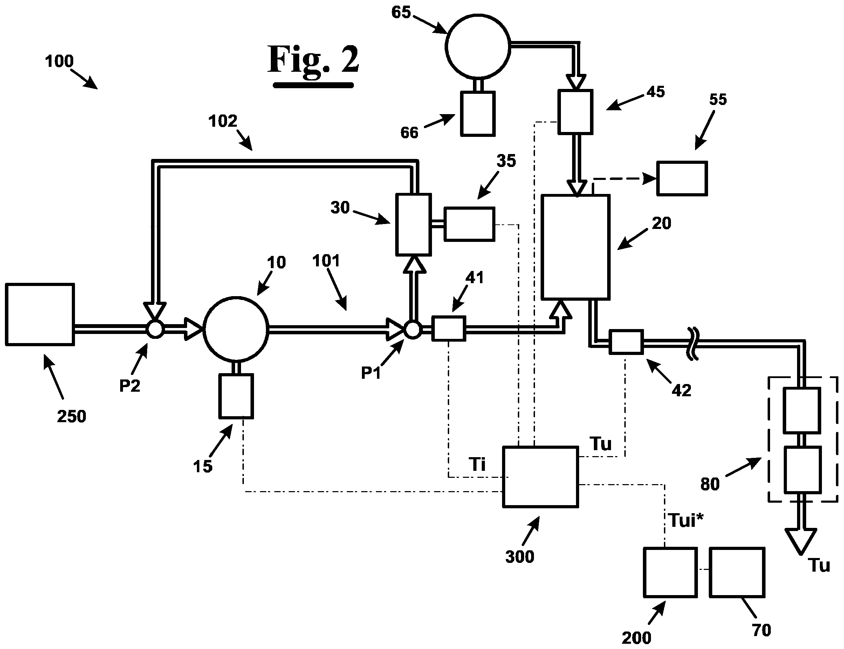

- Fig. 2 shows a block diagram of the water cleaner of figure 1;
- Fig. 3 shows a block diagram of an alternative embodiment of the water cleaner of figure 2;
- Fig. 4 shows a scheme of an embodiment of water cleaner, according to the invention, alternative to that of figure 1;
- Fig. 5 shows a block diagram of another alternative embodiment of the water cleaner of figure 2 provided by the invention.

### Detailed description of some exemplary embodiments of the invention

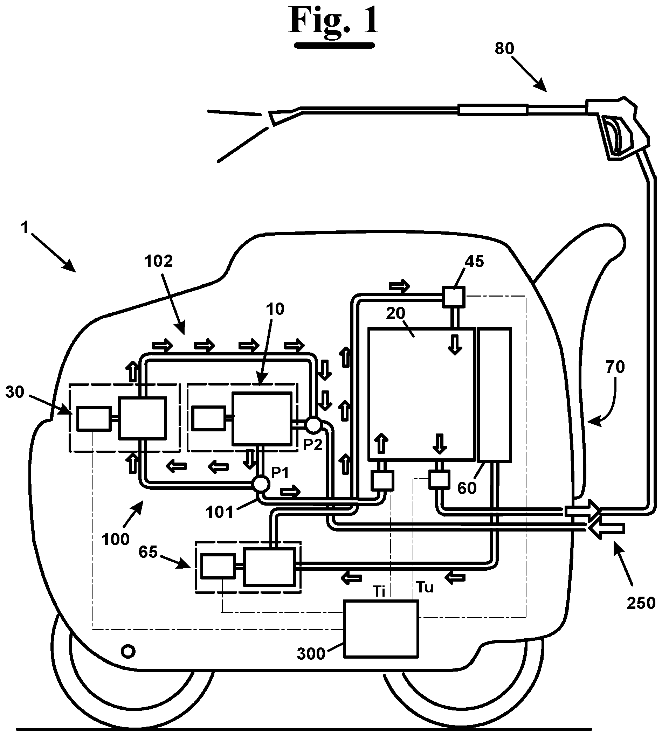

As diagrammatically shown in figure 1, a water cleaner 1, according to the present invention, comprises a pump unit 10 arranged to feed a predetermined flow rate Φ* of a cleaning liquid, for example water, in particular coming from the hydraulic network, at a predetermined pressure, for example comprised between 1 and 10 bar, into a hydraulic circuit 100. This comprises a boiler 20 arranged to heat the cleaning liquid from a determined inlet temperature Ti to a predetermined outlet temperature Tu, at which it exits the boiler 20. The water cleaner 1 is, furthermore, provided with a delivery device 80, for example a jet lance, that is hydraulically connected to the boiler 20 and arranged to deliver the cleaning liquid flow rate at the determined outlet temperature Tu.

The water cleaner 1, according to the present invention, provides, furthermore, an adjustment device 30 configured to adjust the cleaning liquid flow rate that is fed into the boiler 20. In particular, the aforementioned adjustment device 30 can be positioned between the pump unit 10 and the boiler 20.

According to the present invention, a first temperature sensor 41 arranged to detect the temperature of the cleaning liquid flow rate upstream of the boiler 20 and to generate a corresponding inlet temperature signal Ti, and a second temperature sensor 42 arranged to detect the temperature of the cleaning liquid flow rate downstream of the boiler 20 and to generate a corresponding outlet temperature signal Tu are, furthermore, provided. Furthermore, the water cleaner 1, according to the invention, provides a control unit 300, in particular comprising a microcontroller, operatively connected to the first temperature sensor 41, to the second temperature sensor 42 and to the adjustment device 30. In particular, the control unit 300 is configured to set a determined starting value of the flow rate to be fed into the boiler 20 which depends on the aforementioned inlet temperature signal Ti. More in particular, the aforementioned starting value can be determined by the control unit 300 using a determined proprietary computing algorithm. The control unit 300 is, furthermore, arranged to compare the aforementioned outlet temperature signal Tu received from the second sensor 42 and determined from the aforementioned set starting flow rate, with the aforementioned predetermined outlet temperature value Tu* and, therefore, to operate the adjustment device 30 in order to increase, or decrease, the flow rate of the cleaning liquid fed into the boiler 20, with respect to the set starting value, according as the outlet temperature signal Tu is, respectively, less, or higher, than the predetermined outlet temperature value Tu*. More in detail, the control unit 300 is arranged to operate the aforementioned adjustment device 30 to adjust the flow rate that is fed into the boiler 20. More precisely, the control unit 300 is configured to operate the aforementioned adjustment device 30 if the aforementioned outlet temperature Tu is different from the aforementioned predetermined outlet temperature value Tu*, in particular different beyond a predetermined tolerance *range* ΔTu, for example comprised between 1°C and 10°C, advantageously comprised between 2°C and 5°C. According to a possible embodiment also the pump unit 10, in particular the motor 15 of which the pump can be provided with, can be operatively connected to the control unit 300. Advantageously, the aforementioned predetermined value of the outlet temperature Tu* can be comprised between 91°C and 98°C, preferably comprised between 95°C and 98°C.

As diagrammatically shown in figure, the hydraulic circuit 100 can comprise at least a return branch 102 arranged to intersect the main branch 101 between a first point P1 positioned downstream of the aforementioned pump unit 30 and a second point P2 positioned upstream of the same. The flow rate adjustment device 30 can be, preferably, positioned at the return branch 102. In particular, the flow rate adjustment device 30 can be arranged to deviate, at the first point P1, a determined adjustment flow rate, which is, therefore, subtracted from the main flow rate of said cleaning liquid, and sent to the second point P2, through the aforementioned return branch 102 of the hydraulic circuit 100. In this way, it is possible to adjust the flow rate of the cleaning liquid that is fed into the boiler 20, in particular increasing, or decreasing the same, respectively decreasing, or increasing, the adjustment flow rate. Therefore, in this case, the control unit 300 is arranged to set a determined starting adjustment value to be subtracted from the predetermined flow rate that is delivered by the pump unit 10 in order to obtain the aforementioned predetermined cleaning liquid flow rate that is fed into the boiler 20.

In particular, the aforementioned adjustment device 30 can be a control valve operatively connected to the control unit 300. According to an embodiment of the invention, the adjustment device 30 can be an automatically operated needle valve, or needle throttling, which allows to adjust very accurately the flow rate.

According to an embodiment of the invention, the water cleaner 1, according to the invention, can be, furthermore, provided with a selector device 70, in particular comprising an interface element 200, for example a display touch-screen, or a keyboard, configured to select a determined cleaning program among a plurality of predetermined cleaning programs. In particular, each cleaning program can be associated to a predetermined outlet temperature Tu*. When the user selects, in particular by the aforementioned interface element 200, a predetermined cleaning program among a predetermined plurality of cleaning programs which are provided and loaded in the store of the water cleaner 1, the control unit 300 is arranged to set come predetermined value of the outlet temperature Tu* the value of the temperature Tui* associated to the aforementioned selected cleaning program.

More in detail, each cleaning program, or appliance, that is provided by the machine 1, for example car body washing, or removal of a paint from a wall, or environment sanitizing, corresponds a predetermined outlet temperature Tu* which is communicated to the control unit 300. The control unit 300 is, therefore, arranged to temporarily use the aforementioned predetermined value of the outlet temperature Tui*, choosing the same among a plurality of predetermined outlet temperature values Tu1*, Tu2*, Tui*...Tun* respectively associated to the different cleaning programs loaded in the memory of the water cleaner 1, in particular to elaborate the signals of temperature Ti and Tu received from the temperature sensors 41 and 42 and to carry out the control sequence described above.

In this way, it is possible to guarantee for each different cleaning program of the water cleaner 1, to deliver through the delivery device 80, the cleaning liquid used at the temperature suitable for the type of cleaning program, in particular the different type of appliance, for which is temporarily set, avoiding the drawbacks of prior art, i.e. to have the outlet temperature of the cleaning liquid higher, or less, than the predefined temperatures.

The water cleaner 1 can, furthermore, provide a collection container 60 containing a determined quantity of fuel, for example diesel oil, that is used to feed the boiler 20. More precisely, the fuel can be drawn by a second pump unit 65, in particular provided with a motor 66, which provides to feed it into the boiler 20. In particular, also the pump unit 65 can be advantageously connected to the control unit 300.

As diagrammatically shown in the figures from 1 to 4, the water cleaner 1 can be, advantageously, provided with a ON/OFF valve 45, arranged to connect, or disconnect, the second pump unit 65 with the boiler 20. In particular, the ON/OFF valve 45 is opened when the boiler 20 has to be turned on, and therefore during working conditions of the water cleaner 1, and is closed for stopping the feeding of fuel into the boiler 20, when the water cleaner 1 is turned off by the user, or for safety reasons, for example owing to a malfunction of the machine.

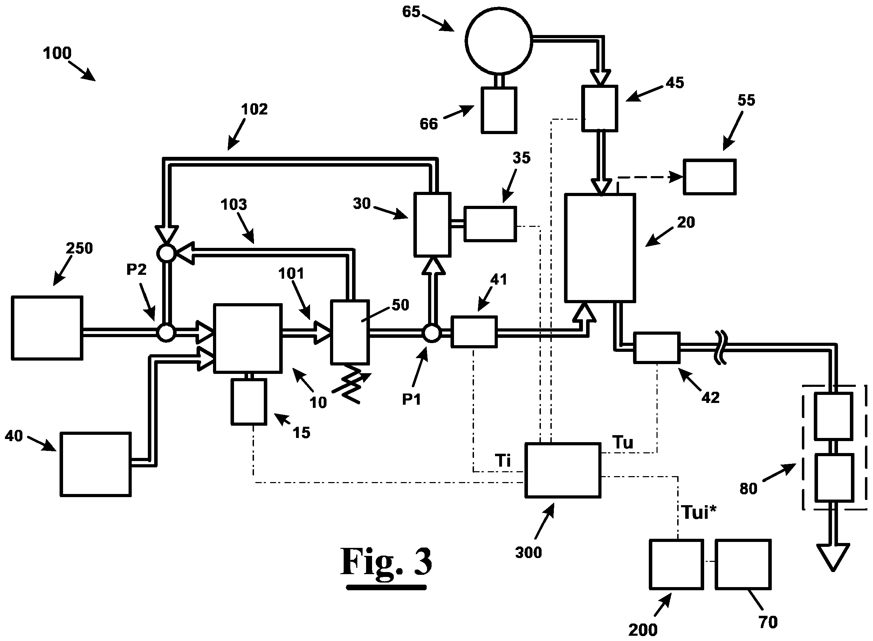

In the example of figure 3, a by-pass valve 50, advantageously provided with a device for manually adjusting the pressure, is, furthermore, provided positioned at the delivery of the pump unit 10, in particular upstream of the aforementioned first point P1 at which the first return branch 102 is connected to the main branch 101 of the hydraulic circuit 100. More precisely, in this case, the circuit 100 is provided with a second return branch 103, in such a way to be able to isolate the pump unit 10 from the other part of the hydraulic circuit 100. Furthermore, the water cleaner 1, according to the invention, can be provided with a flame presence sensor 55 in order to verify the conditions of correct functioning of the boiler 20.

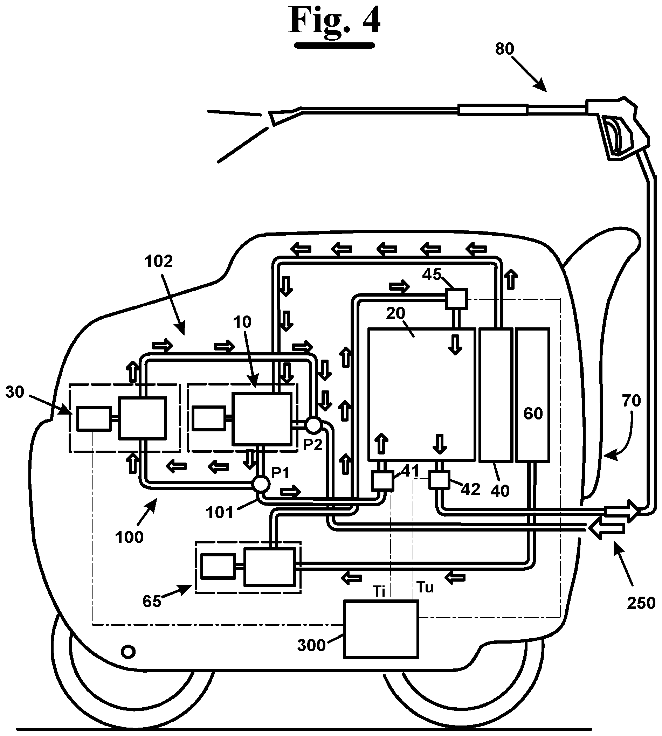

As diagrammatically shown in the embodiment of figure 4, the water cleaner 1 can be, furthermore, provided with at least a supplementary collection container 40 containing a detergent and descaling agent. More precisely, the pump unit 10 can be arranged to suck the detergent and descaling agent from the, or each, supplementary collection container 40 and to add the same to the cleaning liquid, in particular water, before feeding the resulting mix into the boiler 20.

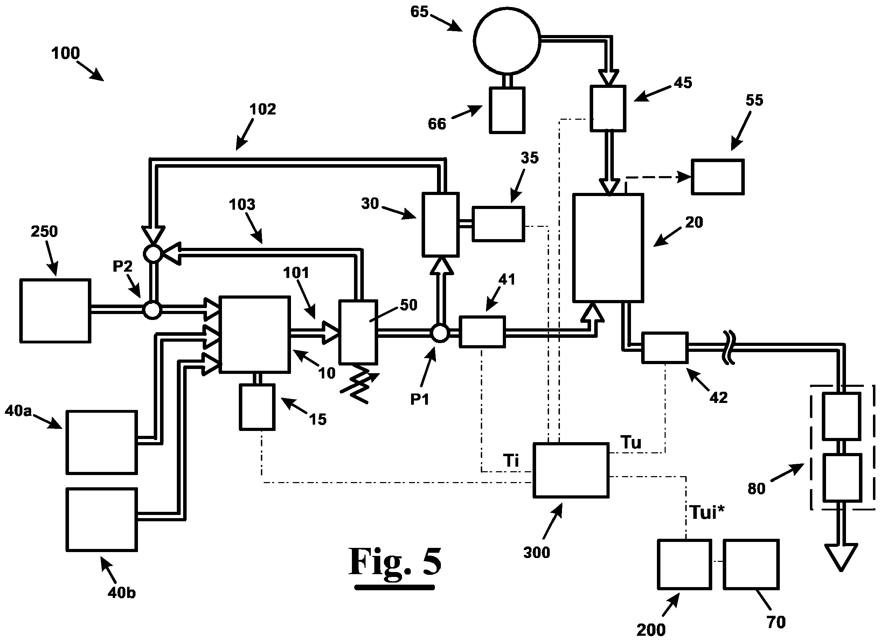

In the embodiment of figure 5, for example, a first supplementary collection container 40a containing a detergent agent, and a second supplementary collection container 40b containing a descaling agent, are provided. In this case both the first and the second supplementary collection containers 40a and 40b are connected to the pump unit 10. This, in particular, depending on the kind of selected cleaning program, provides to suck one and/or the other substance from the related supplementary collection container 40a and/or 40b to feed the resulting mix as cleaning liquid into the boiler 20.

According to an embodiment of the invention, at least one between the first and the second temperature sensor 41 and 42 can be of electric type. In particular, the first and/or the second temperature sensor 41 and/or 42 of electronic type can be arranged to send the respective temperature signal Ti and/or Tu directly to the control unit 300. In particular, the first temperature sensor 41 and/or the second temperature sensor 42 of electronic type can be a NTC thermistor, i.e. of *Negative Temperature Coefficient* type, or a PTC thermistor, i.e. of *Positive Temperature Coefficient* type.

According to an alternative embodiment of the invention, instead, the temperature signal detected by the first and/or the second temperature sensor 41 and/or 42 can be sent to the control unit 300 through the aforementioned thermostat.

In particular, at least one between the first and the second temperature sensor 41 and 42, during working condition, can be dipped into the flow of cleaning liquid at a respective point of the hydraulic circuit 100. For example, the aforementioned temperature sensor 41, or 42, can be housed within a measurement block, not shown in the figures for simplicity, configured in such a way to be crossed, in use, by the cleaning liquid which passes through the aforementioned hydraulic circuit 100.

The solution according to the present invention is, therefore, able to guarantee that the outlet temperature Tu selected for a specific cleaning program chosen by the user is always use with a high accuracy level and without turning off the boiler 20, i.e. with the boiler 20 that is always in mode ON, unless it is necessary to turn off the boiler 20 and the machine 1 owing to particular circumstances, for example owing to a malfunction of the machine 1, or situations that could endanger the user safety.

## Claims

1. A water cleaner (1) comprising a hydraulic circuit (100) equipped with:
- a pump unit (10) arranged to feed a predetermined flow rate of a cleaning liquid into a main branch (101) of said hydraulic circuit (100);
- a boiler (20) arranged to provide a predetermined thermal power to at least a part of said predetermined flow rate of said cleaning liquid fed into said boiler (20) in order to cause the flow rate to be heated from an inlet temperature (Ti) up to a predetermined outlet temperature (Tu*);
- a delivery device (80) hydraulically connected to said boiler (20) and arranged to deliver said flow rate of said cleaning liquid fed into said boiler (20) at said predetermined outlet temperature (Tu*);
- an adjustment device (30) configured to adjust said determined cleaning liquid flow rate fed into said boiler (20) ;
a second temperature sensor (42) arranged to detect the temperature of said cleaning liquid flow rate downstream of said boiler (20) and to generate a corresponding outlet temperature signal (Tu);
- a control unit (300) operatively connected to said second temperature sensor (42) and to said adjustment device, T
said water cleaner (1) being **characterized in that** it comprises, furthermore:
- a first temperature sensor (41) arranged to detect the temperature of said cleaning liquid flow rate upstream of said boiler (20) and to generate a corresponding inlet temperature signal (Ti);
- the control unit (300) operatively connected to said first temperature sensor (41), to said second temperature sensor (42) and to said adjustment device (30), said control unit (300) being configured to set a determined starting flow rate of said cleaning liquid to be fed into said boiler (20) depending on said inlet temperature signal (Ti) received from said first sensor (41), to compare said outlet temperature signal (Tu) received by said second temperature sensor (42) with said predetermined value of the outlet temperature (Tu*), and to operate said adjustment device (30) to increase, or decrease, with respect to said starting flow rate said flow rate of said cleaning liquid fed into said boiler (20) if said outlet temperature signal (Tu) is different from said predetermined outlet temperature value (Tu*).

2. Water cleaner, according to claim 1, wherein said hydraulic circuit comprises at least a return branch (102) arranged to intersect said main branch (101) between a first point (P1) positioned downstream of said pump unit (10) and a second point (P2) positioned upstream of said pump unit (10).

3. Water cleaner, according to claim 2, wherein said adjustment device (30) is positioned at said return branch (102) and is arranged to deviate at said first point (P1) a determined adjustment flow rate of said cleaning liquid from said predetermined flow rate of said cleaning liquid directing the same towards said second point (P2) of said hydraulic circuit (100) in order to adjust said flow rate of said cleaning liquid fed into said boiler (20).

4. Water cleaner, according to any of the previous claims, wherein a selector device (70) is, furthermore, provided configured to select a determined cleaning program among a plurality of predetermined cleaning programs, each of which associated to a predetermined outlet temperature (Tu*).

5. Water cleaner, according to claim 4, wherein said selector device (70) comprises an interface element (200) configured to select a determined cleaning program among a plurality of predetermined cleaning programs.

6. Water cleaner, according to any of the previous claims, wherein, a collection container (60) is, furthermore, provided arranged to contain a fuel, and wherein a second adjustment device is provided configured to draw a determined flow rate of said fuel from said collection container (60) and to feed it into said boiler (20).

7. Water cleaner, according to claim 5, or 6, wherein each said predetermined cleaning programs is associated to a predetermined outlet temperature value (Tu1*,Tu2*, Tui*....Tun*) and wherein said control unit (300) is arranged to temporarily set as predetermined outlet temperature value (Tu*) the outlet temperature (Tu*i) associated to said selected cleaning program.

8. Water cleaner, according to any of the previous claims, wherein at least a supplementary collection container (40,40a,40b) is, furthermore, provided containing a detergent and descaling agent, and wherein said pump unit (10) is configured to suck said detergent and descaling agent from said, or each, supplementary collection container (40,40a,40b) and to add the same to said cleaning liquid before feeding a resulting mix into said boiler (20).

9. Water cleaner, according to any of the previous claims, wherein said adjustment device (30) is a control valve.

10. Water cleaner, according to any of the previous claims, wherein said adjustment device (30) is an automatically operated needle valve.

11. Water cleaner, according to any of the previous claims, wherein said predetermined outlet temperature value (Tu*) is comprised between 95°C and 98°C.

12. Water cleaner, according to any of the previous claims, wherein at least one between said first and said second temperature sensor (41,42), in working conditions, is dipped into said cleaning liquid flow at a respective point of the hydraulic circuit (100).

13. Water cleaner, according to any of the previous claims, wherein said, or each, temperature sensor (41,42) is arranged to be housed within a measurement block configured to be passed through, in use, by the cleaning liquid circulating in said hydraulic circuit (100).

14. Water cleaner, according to any of the previous claims, wherein said, or each, temperature sensor (41,42) is selected from the group comprising:
- a Negative Temperature Coefficient, or NTC, sensor;
- a Positive Temperature Coefficient, or PTC, thermistor.

15. Method for adjusting the temperature of a cleaning liquid supplied by a water cleaner (1) comprising the steps of:
- pumping by a pump unit (10) a predetermined flow rate of a cleaning liquid into a hydraulic circuit (100);
- heating by a boiler (20) at least a part of said flow rate of said cleaning liquid up to a predetermined temperature;
- detection of the temperature of the cleaning liquid flow rate entering the boiler (20) by a first temperature sensor (41) positioned upstream of the boiler (20), and generation of a corresponding inlet temperature signal (Ti) ;
- detection of the temperature of the flow rate of liquid exiting said boiler (20) by a second temperature sensor (42) positioned downstream of said boiler, and generation of a corresponding outlet temperature signal (Tu) ;
- sending said inlet temperature signal (Ti) and said outlet temperature signal (Tu) to a control unit (300);
- setting by said control unit (300) a starting cleaning liquid flow rate to be fed to said boiler (20), said starting flow rate being computed on the basis of said inlet temperature signal (Ti);
- comparing by said control unit said outlet temperature signal (Tu) with a predetermined outlet temperature value (Tu*);
- operating by said control unit (300) an adjustment device (30) configured to increase, or decrease, said flow rate of said cleaning liquid fed into said boiler with respect to said determined starting flow rate, said operating step of said adjustment device (30) being carried out by said control unit (300) on the basis of the result of said comparison step of said outlet temperature signal (Tu) with respect to said predetermined outlet temperature value (Tu*).

## Patentansprüche

1. Wasserreiniger (1) mit einem hydraulischen Kreislauf (100), ausgestattet mit:
- einer Pumpeneinheit (10), die zum Einleiten einer vorbestimmten Durchflussmenge einer Reinigungsflüssigkeit in einen Hauptzweig (101) des Hydraulikkreises (100) eingerichtet ist;
- einem Boiler (20), der dazu eingerichtet ist, zumindest einem Teil der vorbestimmten Durchflussmenge der in den Boiler (20) eingeleiteten Reinigungsflüssigkeit eine vorbestimmte Wärmeleistung bereitzustellen, um zu bewirken, dass die Durchflussmenge von einer Einlasstemperatur (Ti) auf eine vorbestimmte Auslasstemperatur (Tu*) erhitzt wird;
- einer Fördervorrichtung (80), die mit dem Boiler (20) hydraulisch verbunden ist und dazu eingerichtet ist, die Durchflussmenge der in den Boiler (20) eingeleiteten Reinigungsflüssigkeit bei der vorgegebenen Auslasstemperatur (Tu*) zu fördern;
- einer Einstellvorrichtung (30), die zum Einstellen der vorbestimmten Durchflussmenge der in den Boiler (20) eingeleiteten Reinigungsflüssigkeit konfiguriert ist;
- einem zweiten Temperatursensor (42), der dazu eingerichtet ist, die Temperatur der Durchflussmenge der Reinigungsflüssigkeit stromabwärts des Boilers (20) zu erfassen und ein entsprechendes Auslasstemperatursignal (Tu) zu erzeugen;
- einer Steuereinheit (300), die mit dem zweiten Temperatursensor (42) und der Einstellvorrichtung wirkverbunden ist,
wobei der Wasserreiniger (1) **dadurch gekennzeichnet ist, dass** dieser ferner umfasst:
- einen ersten Temperatursensor (42), der dazu eingerichtet ist, die Temperatur der Durchflussmenge der Reinigungsflüssigkeit stromaufwärts des Boilers (20) zu erfassen und ein entsprechendes Einlasstemperatursignal (Tu) zu erzeugen;
- die Steuereinheit (300), die mit dem ersten Temperatursensor (41), dem zweiten Temperatursensor (42) und der Einstellvorrichtung (30) wirkverbunden ist, wobei die Steuereinheit (300) dazu konfiguriert ist, eine vorbestimmte Anfangsdurchflussmenge der in den Boiler (20) einzuleitenden Reinigungsflüssigkeit in Abhängigkeit von dem vom ersten Sensor (41) empfangenen Einlasstemperatursignal (Ti) einzustellen, um das von dem zweiten Temperatursensor (42) empfangene Auslasstemperatursignal (Tu) mit dem vorbestimmten Wert der Auslasstemperatur (Tu*) zu vergleichen, und die Einstellvorrichtung (30) zu betätigen, um die Durchflussmenge der in den Boiler (20) eingeleiteten Reinigungsflüssigkeit in Bezug auf die Anfangsdurchflussmenge zu erhöhen oder zu verringern, wenn sich das Auslasstemperatursignal (Tu) vom vorgegebenen Auslasstemperaturwert (Tu*) unterscheidet.

2. Wasserreiniger nach Anspruch 1, wobei der Hydraulikkreislauf zumindest einen Rücklaufzweig (102) umfasst, der so angeordnet ist, dass dieser den Hauptzweig (101) zwischen einem ersten Punkt (P1), der stromabwärts der Pumpeneinheit (10) positioniert ist, und einem zweiten Punkt (P2), der stromaufwärts der Pumpeneinheit (10) positioniert ist, kreuzt.

3. Wasserreiniger nach Anspruch 2, wobei die Einstellvorrichtung (30) am Rückführzweig (102) positioniert und dazu eingerichtet ist, am ersten Punkt (P1) eine bestimmte Einstelldurchflussmenge der Reinigungsflüssigkeit von der vorbestimmten Durchflussmenge der Reinigungsflüssigkeit abzuzweigen und diese in Richtung des zweitens Punkts (P2) des Hydraulikkreises (100) zu leiten, um die Durchflussmenge der in den Boiler (20) eingeleiteten Reinigungsflüssigkeit einzustellen.

4. Wasserreiniger nach einem der vorhergehenden Ansprüche, wobei ferner eine Auswahlvorrichtung (70) vorgesehen ist, die zum Auswählen eines bestimmten Reinigungsprogramms aus einer Vielzahl von vorbestimmten Reinigungsprogrammen konfiguriert ist, von denen jedes einer vorbestimmten Auslasstemperatur (Tu*) zugeordnet ist.

5. Wasserreiniger nach Anspruch 4, wobei die Auswahleinrichtung (70) ein Schnittstellenelement (200) umfasst, das zum Auswählen eines bestimmten Reinigungsprogramms aus einer Vielzahl von vorbestimmten Reinigungsprogrammen konfiguriert ist.

6. Wasserreiniger nach einem der vorhergehenden Ansprüche, wobei ferner ein Sammelbehälter (60) vorgesehen ist, der zur Aufnahme eines Brennstoffs eingerichtet ist, und wobei eine zweite Einstellvorrichtung vorgesehen ist, die zum Entnehmen einer bestimmten Durchflussmenge des Brennstoffs aus dem Sammelbehälter (60) und zum Einleiten in den Boiler (20) konfiguriert ist.

7. Wasserreiniger nach Anspruch 5 oder 6, wobei jedes der vorbestimmten Reinigungsprogramme einem vorbestimmten Auslasstemperaturwert (Tu1*, Tu2*, Tui* ... Tun*) zugeordnet ist und wobei die Steuereinheit (300) dazu eingerichtet ist, die dem ausgewählten Reinigungsprogramm zugeordnete Auslasstemperatur (Tu*i) vorübergehend als vorbestimmten Auslasstemperaturwert (Tu*) einzustellen.

8. Wasserreiniger nach einem der vorhergehenden Ansprüche, wobei zumindest ein zusätzlicher Sammelbehälter (40, 40a, 40b) vorgesehen ist, der ein Reinigungs- und Entkalkungsmittel beinhaltet, und wobei die Pumpeneinheit (10) dazu konfiguriert ist, das Reinigungs- und Entkalkungsmittel aus dem oder jedem zusätzlichen Sammelbehälter (40, 40a, 40b) anzusaugen und dieses der Reinigungsflüssigkeit vor dem Einleiten einer resultierenden Mischung in den Boiler (20) hinzuzufügen.

9. Wasserreiniger nach einem der vorhergehenden Ansprüche, wobei die Einstellvorrichtung (30) ein Steuerventil ist.

10. Wasserreiniger nach einem der vorhergehenden Ansprüche, wobei die Einstelleinrichtung (30) ein automatisch betätigtes Nadelventil ist.

11. Wasserreiniger nach einem der vorhergehenden Ansprüche, wobei der vorgegebene Auslasstemperaturwert (Tu*) zwischen 95°C und 98°C liegt.

12. Wasserreiniger nach einem der vorhergehenden Ansprüche, wobei zumindest einer der beiden Temperatursensoren (41, 42) unter Betriebsbedingungen an einem jeweiligen Punkt des Hydraulikkreislaufs (100) in den Reinigungsflüssigkeitsstrom eingetaucht ist.

13. Wasserreiniger nach einem der vorhergehenden Ansprüche, wobei der oder jeder Temperatursensor (41, 42) zum Unterbringen in einem Messblock eingerichtet ist, der so konfiguriert ist, dass dieser im Gebrauch von der im Hydraulikkreislauf (100) zirkulierenden Reinigungsflüssigkeit durchströmt wird.

14. Wasserreiniger nach einem der vorhergehenden Ansprüche, wobei der oder jeder Temperatursensor (41, 42) aus der Gruppe ausgewählt ist, umfassend:
einen Sensor mit negativem Temperaturkoeffizienten oder NTC-Sensor;
einen Thermistor mit positivem Temperaturkoeffizienten oder PTC-Thermistor.

15. Verfahren zum Einstellen der Temperatur einer von einem Wasserreiniger (1) zugeführten Reinigungsflüssigkeit, das folgende Schritte umfasst:
- Pumpen einer vorbestimmten Durchflussmenge einer Reinigungsflüssigkeit durch eine Pumpeneinheit (10) in einen Hydraulikkreislauf (100);
- Erhitzen zumindest eines Teils der Durchflussmenge der Reinigungsflüssigkeit auf eine vorbestimmte Temperatur durch einen Boiler (20);
- Erfassen der Temperatur der in den Boiler (20) eintretenden Reinigungsflüssigkeitsmenge durch einen ersten Temperatursensor (41), der stromaufwärts des Boilers (20) positioniert ist, und Erzeugen eines entsprechenden Einlasstemperatursignals (Ti);
- Erfassen der Temperatur der aus dem Boiler (20) austretenden Flüssigkeitsmenge durch einen zweiten Temperatursensor (42), der stromabwärts des Boilers positioniert ist, und Erzeugen eines entsprechenden Auslasstemperatursignals (Tu);
- Senden des Einlasstemperatursignals (Ti) und des Auslasstemperatursignals (Tu) an eine Steuereinheit (300);
- Einstellen einer Anfangsdurchflussmenge der in den Boiler (20) einzuleitenden Reinigungsflüssigkeit durch die Steuereinheit (300), wobei die Anfangsdurchflussmenge basierend auf dem Einlasstemperatursignal (Ti) berechnet wird;
- Vergleichen des Auslasstemperatursignals (Tu) mit einem vorgegebenen Auslasstemperaturwert (Tu*) durch die Steuereinheit;
- Betätigen durch die Steuereinheit (300) einer Einstellvorrichtung (30), die dazu konfiguriert ist, die Durchflussmenge der in den Boiler eingeleiteten Reinigungsflüssigkeit in Bezug auf die bestimmte Anfangsdurchflussmenge zu erhöhen oder zu verringern, wobei der Betätigungsschritt der Einstellvorrichtung (30) von der Steuereinheit (300) basierend auf dem Ergebnis des Vergleichsschritts des Auslasstemperatursignals (Tu) in Bezug auf den vorbestimmten Auslasstemperaturwert (Tu*) ausgeführt wird.

## Revendications

1. Nettoyeur à eau (1) comprenant un circuit hydraulique (100) équipé :
- d'une unité de pompe (10) agencée de manière à fournir un débit prédéterminé d'un liquide de nettoyage à une branche principale (101) dudit circuit hydraulique (100) ;
- d'une chaudière (20) agencée de manière à fournir une puissance thermique prédéterminée à au moins une partie dudit débit prédéterminé dudit liquide de nettoyage fourni à ladite chaudière (20) afin d'amener le débit à être chauffé d'une température d'entrée (Ti) jusqu'à une température de sortie prédéterminée (Tu*) ;
- d'un dispositif d'alimentation (80) relié de façon hydraulique à ladite chaudière (20) et agencé de manière à alimenter ledit débit dudit liquide de nettoyage fourni à ladite chaudière (20) à ladite température de sortie prédéterminée (Tu*) ;
- d'un dispositif de réglage (30) configuré de manière à régler ledit débit de liquide de nettoyage déterminé fourni à ladite chaudière (20) ;
- d'une seconde sonde de température (42) agencée de manière à détecter la température dudit débit de liquide de nettoyage en aval de ladite chaudière (20) et à générer un signal de température de sortie (Tu) correspondant ;
- une unité de commande (300) reliée de façon fonctionnelle à ladite seconde sonde de température (42) et audit dispositif de réglage,
ledit nettoyeur à eau (1) étant **caractérisé en ce qu'**il comprend, en outre :
- une première sonde de température (41) agencée de manière à détecter la température dudit débit de liquide de nettoyage en amont de ladite chaudière (20) et à générer un signal de température d'entrée (Ti) correspondant ;
- l'unité de commande (300) reliée de façon fonctionnelle à ladite première sonde de température (41), à ladite seconde sonde de température (42) et audit dispositif de réglage (30), ladite unité de commande (300) étant configurée de manière à définir un débit de départ déterminé dudit liquide de nettoyage devant être fourni à ladite chaudière (20) en fonction dudit signal de température d'entrée (Ti) reçu en provenance de ladite première sonde (41), à comparer ledit signal de température de sortie (Tu) reçu par ladite seconde sonde de température (42) avec ladite valeur prédéterminée de la température de sortie (Tu*), et à faire fonctionner ledit dispositif de réglage (30) de manière à augmenter, ou à diminuer, par rapport audit débit de départ ledit débit dudit liquide de nettoyage fourni à ladite chaudière (20) si ledit signal de température de sortie (Tu) est différent de ladite valeur de température de sortie prédéterminée (Tu*).

2. Nettoyeur à eau, selon la revendication 1, dans lequel ledit circuit hydraulique comprend au moins une branche de retour (102) agencée de manière à croiser ladite branche principale (101) entre un premier point (P1) positionné en aval de ladite unité de pompe (10) et un second point (P2) positionné en amont de ladite unité de pompe (10).

3. Nettoyeur à eau, selon la revendication 2, dans lequel ledit dispositif de réglage (30) est positionné au niveau de ladite branche de retour (102) et est agencé de manière à dévier au niveau dudit premier point (P1) un débit de réglage déterminé dudit liquide de nettoyage à partir dudit débit prédéterminé dudit liquide de nettoyage en le dirigeant vers ledit second point (P2) dudit circuit hydraulique (100) afin de régler ledit débit dudit liquide de nettoyage fourni à ladite chaudière (20).

4. Nettoyeur à eau, selon l'une quelconque des revendications précédentes, dans lequel un dispositif sélecteur (70) est, en outre, fourni et configuré de manière à sélectionner un programme de nettoyage déterminé parmi une pluralité de programmes de nettoyage prédéterminés, chacun d'entre eux étant associé à une température de sortie prédéterminée (Tu*).

5. Nettoyeur à eau, selon la revendication 4, dans lequel ledit dispositif sélecteur (70) comprend un élément d'interface (200) configuré de manière à sélectionner un programme de nettoyage déterminé parmi une pluralité de programmes de nettoyage prédéterminés.

6. Nettoyeur à eau, selon l'une quelconque des revendications précédentes, dans lequel, un récipient de collecte (60) est, en outre, fourni et agencé de manière à contenir un combustible, et dans lequel un second dispositif de réglage est fourni et configuré de manière à tirer un débit déterminé dudit combustible à partir dudit récipient de collecte (60) et à le fournir à ladite chaudière (20).

7. Nettoyeur à eau, selon la revendication 5, ou 6, dans lequel chacun desdits programmes de nettoyage prédéterminés est associé à une valeur de température de sortie prédéterminée (Tu1^{∗}, Tu2^{∗}, Tui^{∗}... Tun^{∗}) et dans lequel ladite unité de commande (300) est agencée de manière à définir de façon temporaire en tant que valeur de température de sortie prédéterminée (Tu*) la température de sortie (Tu*i) associée audit programme de nettoyage sélectionné.

8. Nettoyeur à eau, selon l'une quelconque des revendications précédentes, dans lequel au moins un récipient de collecte (40, 40a, 40b) supplémentaire est, en outre, fourni et contient un détergent et un agent de détartrage, et dans lequel ladite unité de pompe (10) est configurée de manière à aspirer ledit détergent et ledit agent de détartrage à partir dudit, ou de chaque, récipient de collecte (40, 40a, 40b) supplémentaire et à les ajouter audit liquide de nettoyage avant de fournir un mélange résultant à ladite chaudière (20).

9. Nettoyeur à eau, selon l'une quelconque des revendications précédentes, dans lequel ledit dispositif de réglage (30) est une vanne de régulation.

10. Nettoyeur à eau, selon l'une quelconque des revendications précédentes, dans lequel ledit dispositif de réglage (30) est un robinet à pointeau à commande automatique.

11. Nettoyeur à eau, selon l'une quelconque des revendications précédentes, dans lequel ladite valeur de température de sortie prédéterminée (Tu*) est comprise entre 95 °C et 98 °C.

12. Nettoyeur à eau, selon l'une quelconque des revendications précédentes, dans lequel au moins une parmi ladite première et ladite seconde sonde de température (41, 42), dans des conditions de fonctionnement, est immergée dans ledit débit de liquide de nettoyage au niveau d'un point respectif du circuit hydraulique (100).

13. Nettoyeur à eau, selon l'une quelconque des revendications précédentes, dans lequel ladite, ou chaque, sonde de température (41, 42) est agencée de manière à être logée à l'intérieur d'un bloc de mesure configuré de manière à être traversé, lors de l'utilisation, par le liquide de nettoyage circulant dans ledit circuit hydraulique (100).

14. Nettoyeur à eau, selon l'une quelconque des revendications précédentes, dans lequel ladite, ou chaque, sonde de température (41, 42) est sélectionnée à partir du groupe comprenant :
- une sonde de coefficient de température négatif, ou NTC ;
- une thermistance de coefficient de température positif, ou PTC.

15. Procédé de réglage de la température d'un liquide de nettoyage fourni par un nettoyeur à eau (1) comprenant les étapes de :
- pompage par une unité de pompe (10) d'un débit prédéterminé d'un liquide de nettoyage dans un circuit hydraulique (100) ;
- chauffage par une chaudière (20) d'au moins une partie dudit débit dudit liquide de nettoyage jusqu'à une température prédéterminée ;
- détection de la température du débit de liquide de nettoyage entrant dans la chaudière (20) par une première sonde de température (41) positionnée en amont de la chaudière (20), et génération d'un signal de température d'entrée (Ti) correspondant ;
- détection de la température du débit de liquide sortant de ladite chaudière (20) par une seconde sonde de température (42) positionnée en aval de ladite chaudière, et génération d'un signal de température de sortie (Tu) correspondant ;
- envoi dudit signal de température d'entrée (Ti) et dudit signal de température de sortie (Tu) à une unité de commande (300) ;
- définition par ladite unité de commande (300) d'un débit de liquide de nettoyage de départ devant être fourni à ladite chaudière (20), ledit débit de départ étant calculé sur la base dudit signal de température d'entrée (Ti) ;
- comparaison par ladite unité de commande dudit signal de température de sortie (Tu) avec une valeur de température de sortie prédéterminée (Tu*) ;
- mise en fonctionnement par ladite unité de commande (300) d'un dispositif de réglage (30) configuré de manière à augmenter, ou à diminuer, ledit débit dudit liquide de nettoyage fourni à ladite chaudière par rapport audit débit de départ déterminé, ladite étape de mise en fonctionnement dudit dispositif de réglage (30) étant effectuée par ladite unité de commande (300) sur la base du résultat de ladite étape de comparaison dudit signal de température de sortie (Tu) par rapport à ladite valeur de température de sortie prédéterminée (Tu*).
